**Europäisches Patentamt**

**European Patent Office**

**Office européen des brevets**

(11) Publication number: **0 170 397**
**B1**

(12) **EUROPEAN PATENT SPECIFICATION**

(45) Date of publication of patent specification: **14.03.90**　(51) Int. Cl.⁵: **B 29 B 7/18**

(21) Application number: **85304547.4**

(22) Date of filing: **26.06.85**

(54) Mixing machine.

<table>
<tr><td>

(30) Priority: **26.06.84 GB 8416225**

(43) Date of publication of application:
**05.02.86 Bulletin 86/06**

(45) Publication of the grant of the patent:
**14.03.90 Bulletin 90/11**

(84) Designated Contracting States:
**AT BE CH DE FR GB IT LI LU NL SE**

(56) References cited:
**DE-A-1 454 771**
**GB-A-2 028 153**
**US-A-2 015 618**
**US-A-4 284 358**

**JOURNAL OF THE INTERNATIONAL RUBBER
INSTITUTE, vol. 4, no. 4, August 1970, pages
153-159; P. WHITAKER: "Modern mixing
systems"**

</td><td>

(73) Proprietor: **FRANCIS SHAW PLC**
**P.O. Box 12 Corbett Street Ashton New Road
Manchester, M11 4BB (GB)**

(72) Inventor: **Johnson, Frank**
**c/o Francis Shaw P.L.C. P.O. Box 12 Corbett
Street**
**Ashton New Road Manchester. M11 4BB (GB)**
Inventor: **Homann, Helmut**
**Diekberg 5**
**D-3057 Neustadt 1 (DE)**
Inventor: **Rother, Heinz**
**Nienhagener Strasse 5**
**D-3075 Rodewald (DE)**
Inventor: **Weckerle, Gunter**
**Neustadter Ring 11a**
**D-3410 Northeim (DE)**

(74) Representative: **Allman, Peter John et al**
**MARKS & CLERK Suite 301 Sunlight House Quay
Street**
**Manchester M3 3JY (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a mixing machine.

Mixing machines are widely used in the rubber and plastics industries to mix together rubber and plastics compounds with appropraite additives such as dyes, plasticizers, cross-linking agents, etc. Most mixers currently in use are in accordance with a basic design disclosed in US—A—2,015,618 dated 1935 and comprise two rotors each supporting raised surfaces or nogs of spiral formation. Two nogs are provided on each rotor, one extending the full length of the rotor, the other being in two axially spaced sections to leave a gap therebetween to accommodate the full length nog of the other rotor. The rotors are mounted in a casing with their axes parallel and rotate in opposite directions. As each rotor turns its nogs sweep across the inside surface of the casing and extend between the nogs of the other rotor to a point adjacent the other rotor's surface. The compound to be mixed is subjected to a combined milling and kneading action as a result of the relative motion of the rotors and the casing surface. To avoid overheating of the compound being mixed the mixing machine is cooled by the circulation of water.

Mixers of the general type described in U.S.—A—2,015,618 have been standard to the rubber and plastics industries for a long time and their characteristics and design details are well known. It is accepted in the industry that the radial gap between the radially outer surface of each nog and the facing inner surface of the casing is a critical dimension of the machines, and typically this gap has been set at about 7 mm. It has also been accepted practice to endeavour to maintain a gap of the same magnitude between the radially outer surface of each nog and the facing surface of the other rotor, and between the trailing edge of the trailing end of the nog on one rotor and the adjacent leading edge of the nog on the other rotor. When rotors have been used for a prolonged period they become worn, and in particular the portion of the surface of each rotor which faces the radially outer surface of the nogs on the other rotor is worn away. As a result the gap between the nog and the rotor surface increases significantly. Although such rotor wear has been tolerated by some operators of mixing machines this is primarily due to the costs involved in replacing worn rotors. The performance of worn machines has been generally assumed to be suspect.

A further generally accepted feature of the known mixing machines has been the characteristics of the axial ends of the rotor nogs adjacent the axial end faces of the mixer casing. Generally the leading and trailing ends of each helical nog have extended to the axial ends of the rotor so as to improve the cleaning effect of the nog ends as they pass across the casing end wall. Furthermore, the leading edge of the trailing end of the nogs has often been curved in the direction of rotation so as to improve the scraping effect of the nog on the end wall as shown in U.S.—A—2,015,618. In addition the leading ends of the rotor nogs have been sharply contoured with a leading edge generally parallel to the rotor axis and a straight trailing edge with a view to achieving vigorous working of the compound being mixed and a good scraping effect between the nog and the casing surfaces. Despite these design features it can be difficult to clean a mixer between mixing batches. This can be a very serious problem, particularly when the colour of successive batches is different, as even small amounts of material from one batch can serieously affect the quality of a subsequent batch.

It is an object of the present invention to obviate or mitigate the above problems.

According to the present invention, there is provided a mixer comprising a casing, two rotors supported in the casing with their axes of rotation parallel, and means for turning the rotors in opposite directions, each rotor supporting two nogs of generally helical formation, one nog comprising a single formation and the other comprising two axially spaced formations between which the single formation nog of the other rotor is received as the rotors turn, characterised in that the radial distance between the radially outer surface of each nog of one rotor and the adjacent surface of the other rotor is substantially greater than the radial distance between the radially outer surface of each rotor nog and the inner surface of the casing.

The above arrangement, enables the throughput of a machine in terms of weight per unit time to be increased as compared with conventional machines. More material can be mixed in one batch without increasing the mixing time.

Preferably the nog/rotor distance is greater than twice the nog/casing distance, e.g. 15 mm rather than 6.5 mm, although a 3 to 2 ratio or 7 to 4 ratio is also advantageous. The rotor diameter, excluding the raised nogs, may be uniform, but preferably depressions are formed in the rotor surface facing the nogs in the manner of "footprints" beneath the nogs. Preferably the edges of the depressions are smoothly contoured.

Preferably there is an axial gap between the trailing end of the single formation nog of each rotor and the adjacent axial end of the casing, whereby material being mixed can pass through the gap.

This arrangement improves the circulation of material and thus makes it easier to dump a batch of mixed material from the mixer and to clean the mixer thereafter, and hence makes it possible to effectively increase throughput. In addition however it appears that this arrangement also enables the volume of material in any one batch to be increased without any increase in mixing time or loss of quality which also of course enhances throughput.

Preferably the minimum gap between the trailing end of any one rotor nog and the leading end of another nog towards which it moves as the rotors turn is substantially greater than the gap between the radially outer surface of the nogs and the casing.

This arrangement again results in greater throughput.

Preferably the sides of the nogs adjacent the chamber ends are stream-lined to assist the flow of material across their surfaces.

This arrangement maks it easier to dump mixed material from the mixer and to clean the mixer after the material has been dumped.

An embodiment of the present invention will now be described, by way of example, with reference to the accompanying drawings, in which:

Figures 1 and 2 illustrate features of the rotors of a conventional mixing machine; and

Figures 3 and 4 illustrate the corresponding featurss of an embodiment of the present invention.

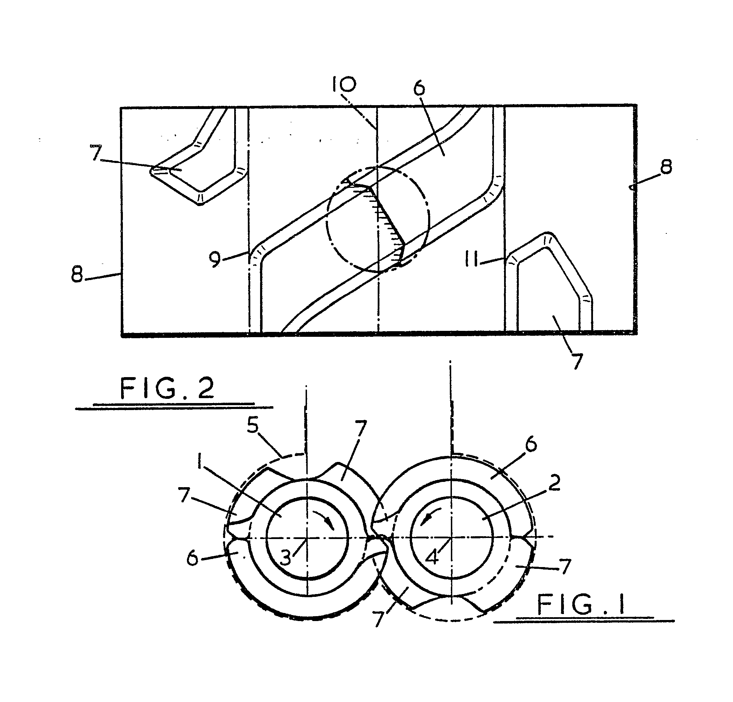

Referring to Figure 1, this is an axial end view of two rotors 1 and 2 which are rotatable in the direction of the arrows about parallel axes 3 and 4 within a casing the walls of which are indicated by dotted line 5. The casing is open at the top to allow material to be fed in, generally with the aid of a hydraulic ram, and a removable door (not shown) is provided in the casing centrally beneath the rotors to allow mixed material to be dumped from the machine. Each rotor supports two generally helical nogs 6 and 7, one formed by a single raised formation extending the full axial length of the rotor, and the other being formed by two axially spaced formations between which the nog 6 of the other rotor is received as the rotors turn.

Figure 2 illustrates the rotor surface as it would appear if rolled out flat. It will be appreciated that the nog portions 7 define axially separated parts of a generally helical feature. Each helical nog extends axially the full length of the rotor and extends circumferentially just over half way around the rotor, the lines 8, 9, 10 and 11 being radially spaced by 90° from each other.

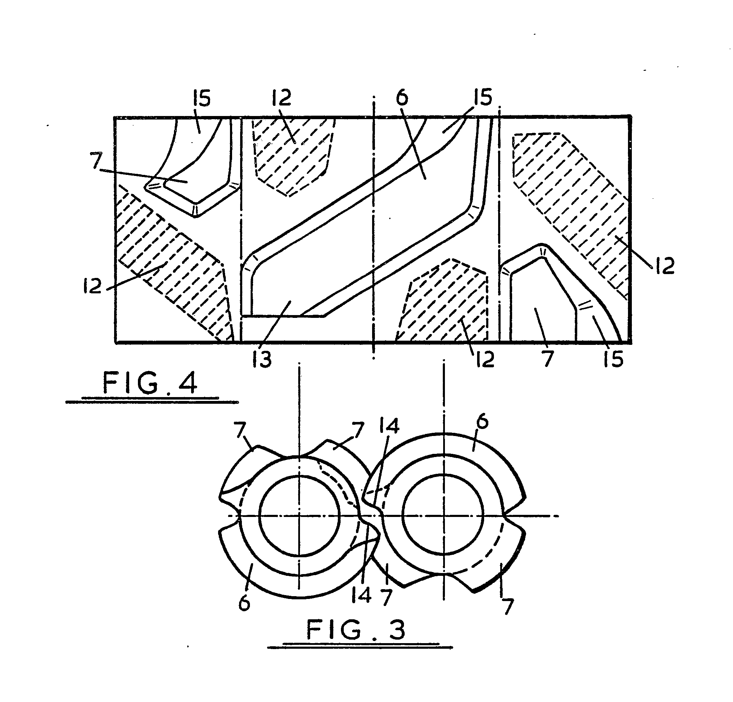

Referring now to Figures 3 and 4, it will be seen that there are four significant differences between the rotor according to the present invention and the conventional rotor.

The first difference is that the shaded areas 12 are milled and ground away to define depressions which are located beneath the "footprints" of the nogs of the other rotor. Thus the minimum radial distance between the radially outer surface of each nog and the surface of the other rotor is increased by the depth of the depression, e.g., from 6.5 mm to 15 mm. The dotted line in Figure 3 shows the cross-section of one end of one of the depressions. It will be seen that the edges of the depression are streamlined.

The second difference is that the trailing end 13 of the long nog 6 is cut back so that there is an axial gap of for example 20 mm between it and the end of the rotor and hence the end wall of the casing (not shown).

The third difference is that the nip faces 14 at the adjacent ends of the nogs are ground back to increase the clearance between them, e.g. from 7 mm to 14 mm.

The fourth difference is that the portions 15 of the axial ends of the nogs are streamlined to improve the flow of material past them.

In a mixer of the type illustrated in Figures 3 and 4 the throughput of material per batch (the batch-weight) has been increased by 12 to 17% without any increase in mixing time or loss of quality as compared with a mixer of the type illustrated in Figures 1 and 2 of the same basic dimensions, that is nog outer diameter 477 mm, rotor body diameter 349 mm, casing internal diameter 490 mm, rotor length 635 mm.

It is sometimes necessary however, to increase the rotor speed by up to 5% to maintain the same mixing time as with a standard rotor. The power consumption per batch remains the same so that given a larger batch the specific power used (KWH/Kg) is reduced.

The invention has been described in terms of a complete mixing machine including the casing. It will be appreciated however that rotors modified in accordance with the invention may be supplied as replacements for conventional rotors in existing mixing machines rather than as components of complete mixing machines.

The use of local "footprints" or depressions in the rotor bodies to increase the gap between the nogs and the rotor bodies is described above. The whole of the rotor bodies could be of reduced diameter however to achieve the same effect. It is preferred however to use depressions as the cooled surface area of the rotor body is maintained which would not be the case if the whole rotor body was of reduced diameter. Furthermore, as the batch volume is largely determined by the ability of the rotors to take in or pass out material through the rotor nip rather than by the actual volume of the mixing chamber, the use of local depressions provides a greater area of contact between the mix material and the working surfaces of the rotors and mixing chamber by maintaining passageways for the material as shallow as possible.

To achieve adequate internal cooling cavities and passages and to achieve maximum strength in bending at the rotor/shaft necks a two part shaft shrunk on rotor casting construction is generally used. The use of local "footprint" depressions avoids excessive loop stresses associated with a reduction in rotor diameter over its whole body. The stiffness resisting bending is also maintained.

The above described modification which results in a larger clearance between adjacent ends of the nogs increases the ability of the nogs to draw material into the mixer through the gap between the rotors and this causes an increase in the batch working volume.

The nog end nips form a barrier between the rotors which occurs every 180° of rotation and provides a kneading action which is essential to good mixing. If however, the nog end nips are too tight then excessive compression of the mix material can occur and movement of the mix material within the mixing chamber is restricted. This causes increased power consumption and heat generation without contributing to useful mixing.

## Claims

1. A mixer comprising a casing, two rotors supported in the casing with their axes of rotation parallel, and means for turning the rotors in opposite directions, each rotor supporting two nogs (6, 7) of generally helical formation, one nog (6) comprising a single formation and the other (7) comprising two axially spaced formations between which the single formation nog of the other rotor is received as the rotors turn, characterised in that the radial distance between the radially outer surface of each nog of one rotor and the adjacent surface of the other rotor is substantially greater than the radial distance between the radially outer surface of each rotor nog and the inner surface of the casing.

2. A mixer according to Claim 1, wherein the nog to rotor distance is more than twice the nog to casing distance.

3. A mixer according to Claim 1 or 2, wherein the diameter of each rotor, excluding the nogs, is uniform.

4. A mixer according to Claim 1 or 2, wherein the outer surface of each rotor has depressions (12) formed therein, each depression facing a respective nog on the other rotor when that nog is located between the two rotors.

5. A mixer according to any preceding claim, wherein there is an axial gap between the trailing end (13) of the single formation nog (6) of each rotor and the adjacent axial end of the casing, whereby material being mixed can pass through the gap.

6. A mixer according to any preceding claim, wherein the minimum gap between the trailing end (14) of any one rotor nog and the leading end (14) of another nog towards which it moves as the rotors turn is substantially greater than the gap between the radially outer surface of the nogs and the casing.

7. A mixer according to any preceding claim, wherein the sides (15) of the nogs adjacent the chamber ends are stream-lined to assist the flow of material across their surfaces.

## Patentansprüche

1. Mischmaschine mit einem Gehäuse, zwei Rotoren, die so in dem Gehäuse angeordnet sind, daß ihre Drehachsen parallel verlaufen, und einer Einrichtung zum Drehen der Rotoren in entgegengesetzten Richtungen, wobei jeder Rotor zwei im wesentlichen schraubenförmige Vorsprünge (6, 7) trägt und ein Vorsprung (6) einen einstückigen Abschnitt umfasst, während der andere (7) zwei axial beabstandete Abschnitte umfasst, zwischen denen beim Drehen es Rotors der einen einstückigen Abschnitt umfassende Vorsprung des anderen Rotors aufgenommen wird, dadurch gekennzeichnet, daß der radiale Abstand zwischen der radial außenliegenden Fläche jedes Vorsprunges einens Rotors und die angrenzende Fläche des anderen Rotors im wesentlichen größer als der radiale Abstand zwischen der radial außenliegenden Fläche jedes Rotorvorsprunges und der Innenfläche des Gehäuses ist.

2. Mischmaschine nach Anspruch 1, dadurch gekennzeichnet, daß der Abstand zwischen Vorsprung und Rotor mehr als zweimal so groß ist wie der Abstand zwischen Vorsprung und Gehäuse.

3. Mischmaschine nach Anspruch 1 oder 2, dadurch gekennzeichnet, daß jeder Rotor, ausgenommen der Vorsprünge, einen konstanten Durchmesser hat.

4. Mischmaschine nach Anspruch 1 oder 2, dadurch gekennzeichnet, daß die Außenfläche jedes Rotors darin ausgebildete Vertiefungen (12) aufweist, wobei jede Vertiefung einem entsprechenden Vorsprung auf dem anderen Rotor gegenüberliegt, wenn dieser Vorsprung zwischen den beiden Rotoren angeordnet ist.

5. Mischmaschine nach einem der vorhergehenden Ansprüche, dadurch gekennzeichnet, daß zwischen dem nachlaufenden Ende (13) des aus einem einstückigen Abschnitt bestehenden Vorsprungs (6) jedes Rotors und dem angrenzenden axialen Ende des Gehäuses eine axiale Lücke ausgebildet ist, wodurch Mischmaterial durch die Lücke gelangen kann.

6. Mischmaschine nach einem der vorhergehenden Ansprüche, dadurch gekennzeichnet, daß die kleinste Lücke zwischen dem nachlaufenden Ende (14) irgendeines Rotorvorsprunges und dem führenden Ende (14) eines anderen Vorsprunges, auf das es sich beim Drehen des Rotors zubewegt, im wesentlichen größer ist als die Lücke zwischen der radial außenliegenden Fläche der Vorsprünge und dem Gehäuse.

7. Mischmaschine nach einem der vorhergehenden Ansprüche, dadurch gekennzeichnet, daß die an die Kammerenden angrenzenden Seiten (15) der Vorsprünge stromlinienförmig ausgebildet sind, um das Fließen des Materials entlang der Vorsprungsflächen zu fördern.

## Revendications

1. Une machine à mélanger comprenant un carter, deux rotors montés dans le carter avec leurs axes de rotation parallèles, et un moyen pour faire tourner les rotors en sens opposés, chaque rotor supportant deux protubérances (6, 7) de forme généralement hélicoïdale, une protubérance (6) comportant une seule partie et l'autre (7) comportant deux parties espacées axialement entre lesquelles est reçue la protubérance en une seule partie, de l'autre rotor, lorsque les rotors tournent, caractérisée en ce que la distance radiale entre la surface radialement extérieure de chaque protubérance de l'un des rotors et la surface adjacente de l'autre rotor est sensiblement plus grande que la distance radiale entre la surface radialement extérieure de chaque protubérance de rotor et la surface intérieure du carter.

2. Une machine à mélanger selon la revendication 1, dans laquelle la distance de la protubérance au rotor est supérieure au double de la distance séparant la protubérance du carter.

3. Une machine à mélanger selon la revendication 1 ou 2, dans laquelle le diamètre de chaque rotor, à l'exclusion des protubérances, est uniforme.

4. Une machine à mélanger selon la revendication 1 ou 2, dans laquelle la surface extérieure de chaque rotor présente des renfoncements (12) qui y sont ménagés, chaque renfoncement étant situé en regard d'une protubérance respective ménagée sur l'autre rotor, lorsque cette protubérance est située entre les deux rotors.

5. Une machine à mélanger selon l'une quelconque des revendications précédentes, dans laquelle un intervalle axial est ménagé entre l'extrémité arrière (13) de la protubérance en une seule partie (6) de chaque rotor et l'extrémité axiale adjacente au carter, de telle sorte que la matière à mélanger puisse traverser l'intervalle.

6. Une machine à mélanger suivant l'une quelconque des revendications précédentes, dans laquelle l'intervalle minimal entre l'extrémité arrière (14) et l'une quelconque des protubérances des rotors et l'extrémité avant (14) d'une autre protubérance vers laquelle elle se déplace lorsque les rotors tournent, est sensiblement supérieur à l'intervalle ménagé entre la surface radialement extérieure des protubérances et le carter.

7. Une machine à mélanger selon l'une quelconque des revendications précédentes, dans laquelle les côtés (15) des protubérances adjacentes aux extrémités de la chambre sont profilées pour favoriser l'écoulement de la matière le long de leurs surfaces.

FIG. 2

FIG. 1

FIG . 4

FIG . 3